# EUROPÄISCHE PATENTSCHRIFT

(11) **EP 0 754 856 B1**
(45) Veröffentlichungstag und Bekanntmachung des Hinweises auf die Patenterteilung: **21.05.2003**
(21) Anmeldenummer: 96810407.5
(22) Anmeldetag: 19.06.1996
(51) Int. Cl.: F03B 13/10, F01D 25/16

(54) **Rohrturbinenanlage**
Bulb turbine
Turbine bulbe

(30) Priorität: 15.07.1995 DE 19525830
(43) Veröffentlichungstag der Anmeldung: 22.01.1997
(73) Patentinhaber: ALSTOM (Switzerland) Ltd, 5401 Baden (CH)
(72) Erfinder: Schwanda, Josef, 5242 Lupfig (CH)

(56) Entgegenhaltungen:
- EP-A- 0 586 861
- DE-A- 1 503 272
- DE-A- 2 245 913
- DE-A- 2 557 874
- DE-C- 884 930
- DE-U- 6 601 132
- US-A- 2 524 693
- US-A- 3 018 144
- US-A- 3 501 206
- US-A- 4 331 366
- DREHER W: "DIE ELEKTRISCHEN MASCHINEN DER ZENTRALE SANTIAGO AM RIO SIL" BROWN BOVERI MITTEILUNGEN,CH,BROWN BOVERI AND CO. BADEN, Nr. 4, 1. Januar 1970 (1970-01-01), Seiten 182-190, XP000579362 ISSN: 0365-9232

## Beschreibung

### TECHNISCHES GEBIET

Die Erfindung bezieht generell auf sich auf eine Rohrturbinenanlage, bestehend aus einem von einem Gehäuse umschlossenen Generator und einer Wasserturbine, die entweder auf einer gemeinsamen Welle angeordnet oder deren Wellenenden über eine Kupplung miteinander verbunden sind, wobei im Wellenabschnitt zwischen Generator und Turbine ein kombiniertes Trag- und Führungslager vorgesehen ist. Sie bezieht sich insbesondere auf ein kombiniertes Trag- und Führungslager für diese Maschinen, bei dem das kombinierte Trag- und Führungslager von einem es umgebenden Lagerträger gehalten ist, an welchem Lagerträger erste Lagersegmente befestigt sind, die mit einem ersten zylindrischen Wellenabschnitt als Radiallagerträgfläche zusammenwirken, und an welchem Lagerträger zwei Gruppen zweite Lagersegmente befestigt sind, die mit zwei axial distanzierten radial gerichteten Wellenabschnitten als Axiallagertragflächen zusammenwirken, und Mittel vorgesehen sind zur Einstellung der gegenseitigen Lage der Lagersegmente bezüglich der besagten Wellenabschnitte.

Die Erfindung geht dabei generell aus aus von einem Stand der Technik, wie er beispielsweise aus EP-A-0 586 861 und aus Firmenschrift Brow Boveri Mitteilungen April 1970, Band 57, S. 182 - 190, insbesondere Bild 5 auf Seite 186, bekannt ist. Einen mehr ins Detail gehenden Aufbau der kombinierten Trag- und Führungslager für Maschinen diesert Art ist Gegenstand der WO 90/14523.

### TECHNOLOGISCHER HINTERGRUND UND STAND DER TECHNIK

Bei Rohrgeneratoren, auch Rohrturbinen-Generatoren genannt, muss das zwischen Turbine und Generator angeordnete kombinierte Trag- und Führungslager neben dem Eigengewicht der rotierenden Teile auch den viele hundert Tonnen betragenden hydraulischen Schub aufnehmen. Dieses kombinierte Lager ist von einem es umgebenden Lagerträger gehalten. Am Lagerträger sind Axiallagersegmente befestigt, die mit zwei radial gerichteten Tragflächen an einem Wellenbund als Axiallagertragflächen zusammenwirken. Am Lagerträger sind ferner Radiallagersegmente befestigt, die mit dem zylindrischen Wellenabschnitt des besagten Bundes als Radiallagerträgfläche zusammenwirken. Ferner sind allen Segementen und Mittel zur Einstellung der gegenseitigen Lage der Lagersegmente bezüglich der besagten axialen und radialen Lagertragflächen an den Wellenabschnitten zugeordnet (vgl. WO 90/14523).

Die Abstützung der Axiallagersegmente am Lagerträger ist dabei konstruktiv sehr aufwendig, weil der Lagerträger den besagten Bund im weitesten Sinne U-förmig umschliessen muss. Bei Einstell- und Revisionsarbeiten müssen komplizierte Verschalungsteile entfernt werden, um an die Lager-Einstellelemente heranzukommen.

### KURZE DARSTELLUNG DER ERFINDUNG

Der Erfindung liegt die Aufgabe zugrunde, eine Rohrturbinenanlage mit einem kombinierten Trag- und Führungslager zu schaffen, das allen Beanspruchungen standhält, einen einfachen Aufbau aufweist und bei dem die Lagersegmente samt ihren Einstellelementen gut zugänglich sind.

Diese Aufgabe wird erfindungsgemäss dadurch gelöst, dass im Wellenabschnitt zwischen Turbine und Generator eine Ringnut mit orthogonal zur Wellenachse verlaufenden Lagertragflächen ausgebildet ist, dass die zweiten Lagersegmente an je am radial innenliegenden Abschnitt eines eines gemeinsamen Tragbalkens befestigt sind, welcher Tragbalken am Lagerträger lösbar befestigt ist, und welcher Tragbalken in die besagte Ringnut eintaucht.

Die Vorteile der Erfindung sind insbesondere darin zu sehen, dass
- die Montage und Demontage der Lagersegmente einfach durchgeführt werden kann;
- Sowohl die Radial- als auch die Axiallagersegmente gut zugänglich und individuell einstellbar sind;
- Service- und Inspektionsarbeiten rasch ausgeführt werden können;
- die Lager bei Stillstand der Maschine oelfrei sind;
- die durch die konstruktive Gestaltung und Auslagung der Tragbalken die Axiallager-Elastizität in einfacher Weise auf die Gesamt-Elastizität des Rohrgenerators abgestimmt werden kann.

Ein Ausführungsbeispiel der Erfindung sowie weitere damit erzielbare Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: einen stark vereinfachten Längsschnitt durch eine Rohrturbinenanlage;
- Fig.2: einen mehr ins Detail gehenden Längsschnitt durch das Trag- und Führungslager des Generators gemäss Fig.1;
- Fig.3: eine Querschnitt durch einen Teil des radialen Führungslagers des Generators gemäss Fig.2 längs deren Linie AA;
- Fig.4: einen Längsschnitt durch einen Teil eines alternativen Trag- und Führungslagers.

### WEGE ZUR AUSFÜHRUNG DER ERFINDUNG

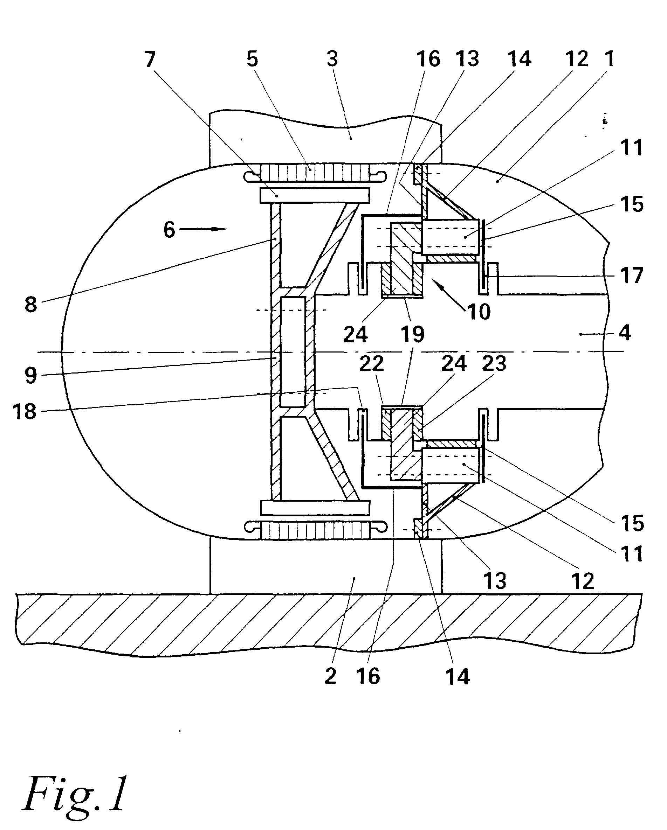

In der stark schematisierten Darstellung einer Rohrturbinenanlage nach Fig.1 ist eine Generator mitsamt Hilfseinrichtungen, der mit einer (nicht dargestellten) Wasserturbine gekoppelt ist in einer tropfenförmigen Kapsel 1 angeordnet, die mittels einer unteren Stütze 2 und einer oberen Stütze 3 unter Wasser gehalten wird. Turbine und Generator sind im Beispielsfall auf derselben Welle 4 angeordnet. Der Generator ist fliegend auf der Welle 4 angeordnet und umfasst einen Stator 5 und einen Rotor 6. Letzterer weist einen Rotorkörper 7 mit (nicht dargestellten) Rotorpolen auf, der auf einer Rotortragkonstruktion 8 befestigt ist. Diese ist im Nabenbereich 9 an der Stirnseite der Welle 4 lösbar befestigt. Am anderen Ende der Welle 4 ist das Turbinenrad angeordnet.

Das generell mit der Bezugsziffer 10 gekennzeichnete kombinierte Trag- und Führungslager sitzt im Wellenabschnitt zwischen Generator und Turbine und wird von einem Lagerträger 11 getragen, der über ein konisches Befestigungsteil 12 und ein im Beispielsfall radial angeordnete Befestigungsteil 13 an einem Flansch 14 an der Innnenwand der Kapsel 1 gehalten ist. Das Lager ist vollständig von einer mehrteiligen Lagerverschalung 15, 16 umgeben, die am wellenseitigen Ende in der Art einer Radialspaltdichtung in Nuten 17, 18 in der Welle eintaucht.

Insoweit sind Rohrturbinenanlagen bekannt und z.B. in der eingangs zitierten Veröffentlichung Brown Boveri Mitteilungen a.a.O. beschrieben und dargestellt.

Wie aus Fig.5 der Brown Boveri Mitteilungen oder auch der einzigen Figur der WO 90/14523 ohne weiteres hervorgeht, ist die Zugänglichkeit der Lagersegmente zweck Einstell- oder ServiceArbeiten nicht nur durch die Lagerverschalungen, sondern auch durch die Bauteile des Lagerträgers erschwert. Dies gilt insbesondere für kombinierte Trag- und Führunglager nach WO 90/14523, also Konstruktionen, bei denen die Axiallager-Segmente mit den beiden Seitenflächen des Wellenbundes zusammenwirken.

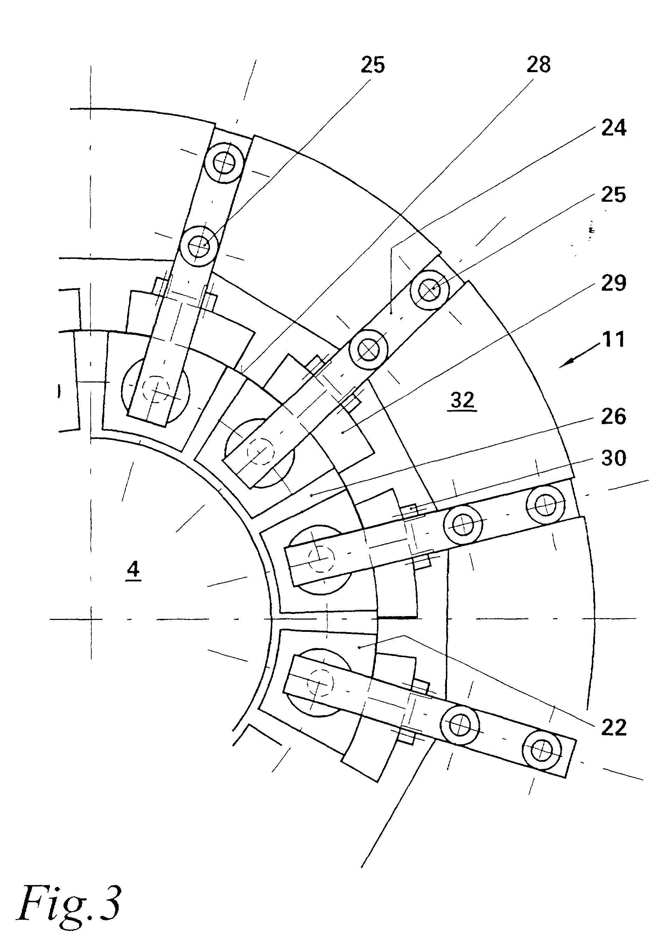

Um nun eine Rohrturbinenanlage mit einem kombinierten Tragund Führungslager zu schaffen, das allen Beanspruchungen standhält, einen einfachen Aufbau aufweist und bei dem die Lagersegmente samt ihren Einstellelementen gut zugänglich sind, ist erfindungsgemäss vorgesehen, im Wellenabschnitt zwischen Turbine und Generator eine Ringnut 19 mit orthogonal zur Wellenachse verlaufenden Lagertragflächen 20 ,21 auszubilden. Die diesen beiden Lagertragflächen 20, 21 zugeordneten Lagersegmente 22, 23 sind am inneren Ende eines radial ausgerichteten Tragbalkens 24 befestigt. Die Tragbalken - im Beispielsfall sind es 12 - sind gleichmässig über den Umfang verteilt (vgl. Fig.3). Die Tragbalken 24 sind am Lagerträger 11 mittels Schraubenbolzen 25, die den Lagerträger 11 axial vollständig durchsetzen, lösbar befestigt und tauchen mitsamt den an ihm befestigten Segmenten 22, 23 in die besagte Ringnut 19 ein. Die Anordnung ist im Beispielsfall so getroffen, dass die orthogonal zur Achse der Welle 4 verlaufende Befestigungsfläche 26 am Lagerträger 11 auf der selben axialen Höhe liegt wie die Lagertragfläche 20 an der Seitenwand der Nut 19. Auf diese Weise lässt sich der Tragbalken samt Segmenten 22, 23 nach Lösen und Entfernen der Schraubenbolzen 25 radial nach ausen ziehen und entfernen.

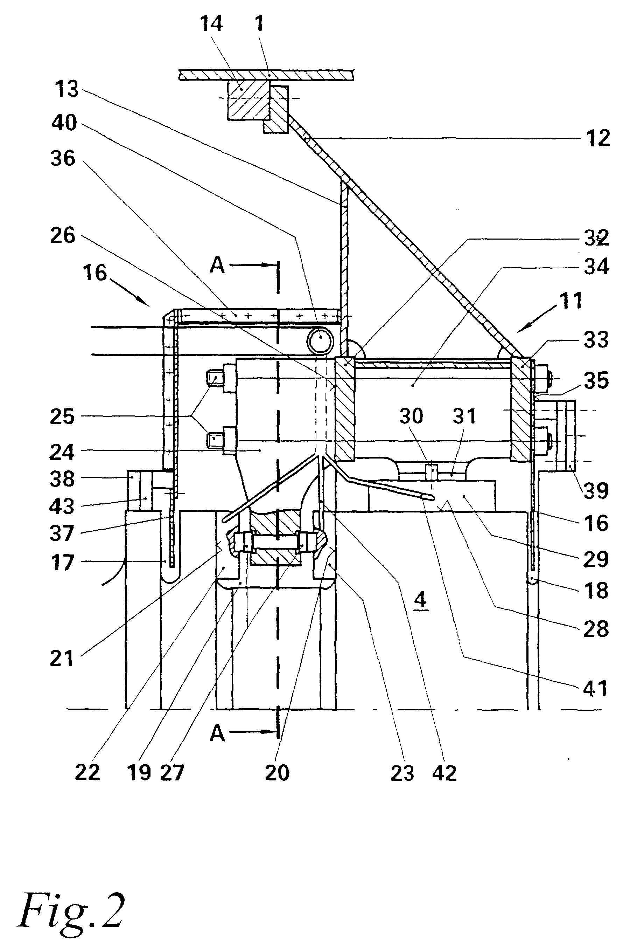

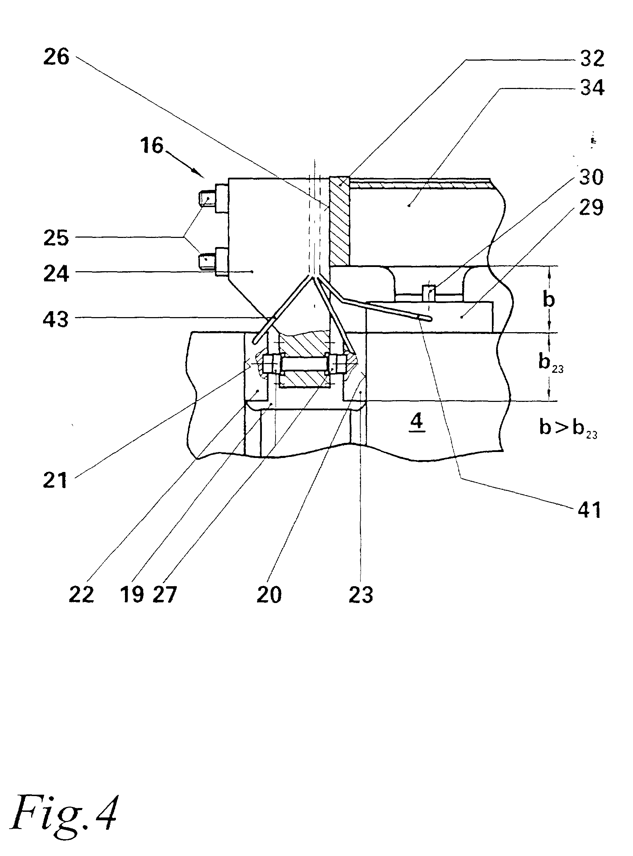

Liegt die orthogonal zur Achse der Welle 4 verlaufende Befestigungsfläche 26 am Lagerträger 11 nicht auf der selben axialen Höhe wie die Lagertragfläche 20 an der Seitenwand der Nut 19 - diese Ausführungsform ist in Fig.4 beispielsweise dargestellt, wobei gleiche Teile mit denselben Bezugszeichen versehen sind wie in Fig.2 - so ist dafür zu sorgen, dass die radiale Breite b₂₃ der Segemente 23 kleiner ist, als die lichte Weite b zwischen dem Einzelring 32 und der Welle 4. Ist diese Bedingung erfüllt, lässt sich der Tragbalken samt Segmenten 22, 23 nach Lösen und Entfernen der Schraubenbolzen 25 zunächst radial nach ausen und dann in Axialrichtung ziehen und damit entfernen.

Die Lagersegmente 22, 23 sind in bekannter Weise mittels ersten axial wirkenden Einstellmitteln 27 am Tragbalken lösbar befestigt und von aussen her gut zugänglich. Die Tragfläche 28 der radialen Traglager-Segmente 28 an der Welle 4 schliesst sich unmittelbar an die Ringnut 19 an. Die radialen Traglager-Segmente 29 sind über zweite radial wirkende Einstellmittel 30 und gegebenenfalls Distanzplatten 31 am Innenumfang des Lagerträgers 11 lösbar befestigt.

Der Lagerträger 11 selbst besteht (im Endzustand) aus einem Doppelring mit zwei axial voneinander distanzierten Einzelringen 32, 33, die über Stege radial gerichtete, axial verlaufende 34 miteinander verschweisst sind. Damit die Spannkräfte für die Tragbalken 24 nicht auf die Schweissnähte wirken, ist die Konstruktion so getroffen, dass die Bohrungen die Stege 34 axial durchdringen und jeder Einzelring 32, 33 aus einer Vielzahl von Ringsegmenten besteht, die jeweils mit den Enden der Stege 34 stumpf verschweisst sind. Die nach innen weisenden axial verlaufenden Schmalseiten der Stege dienen dabei gleichzeitig der Führung und der Befestigungs der radialen Traglager-Segmente 28.

Die Lagerverschalung am turbinenseitigen Ende des Trag- und Führungslagers erfolgt mit einer aus zwei oder mehreren Ringteilen bestehenden Platte 16, die in die Nut 18 eintaucht und an der generatorseitigen Stirnfläche 35 des Lagerträgers 11 angeschraubt ist. Die Lagerverschalung am turbinenseitigen Ende erfolgt durch eine zwei- oder mehrteilige kastenartige Abdeckung 36 mit L-förmigem Querschnitt, die am radialen Befestigungsteil 13 lösbar befestigt ist. Am radial nach innen weisenden Schenkel ist analog zum generatorseitigen Ende eine zwei- oder mehrteilige Ringplatte 37 lösbar befestigt, welche in die Nut 17 eintaucht. Die eigentliche Abdichtung des Lagers gegenüber dem Turbinen- und Generatorraum erfolgt in bekannter Weise durch Berührungsdichtungen 38 bzw. 39, die aussen an der Abdeckung 36 bzw. dem Ring 33 lösbar befestigt sind.

Der Vollständigkeit halber ist in Fig.2 auch die Oelversorgung des Lagers 10 eingezeichnet. Diese umfasst eine Ringleitung 40, die innerhalb der Abdeckung 36 verläuft, und von der nach innen Stichleitungen 41, 42, 43 zu den Segmenten 29, 22 bzw. 23 abzweigen.

Wie aus Fig.2 ohne weiteres erhellt, ermöglicht die beschriebene Konstruktion des kombinierten Trag- und Führungslagers 10 nach Entfernen der Abdeckung 36 einen problemelosen Zugang zu den wesentlichen Lagerteilen. Sowohl die radialen als auch die axialen Tragsegmente sind nicht nur leicht einseh- und justierbar, sie lassen sich auch mit wenigen Handgriffen entfernen. Nach Entfernen der Tragbalken 24 sind nämlich auch die Segmente 29 des Radiallagers einfach in Richtung Ringnut 19 zu verschieben und aus dem Ringraum zwischen Welle 4 und Lagerträger 11 zu entfernen.

Ein weiterer Vorteil der beschriebenen Anordnung ist es, dass axiale Führung und radiale Lagerung sehr kompakt ohne komplizierte Trag- und Haltevorrichtungen ausführbar sind, weil sie an einem gemeinsamen Halteorgan, dem Lagerträger 11 befestigt sind. Die Verwendung eines einzigen Halteorgans (Tragbalken 24) für je zwei Segmente 22, 23 erlaubt es darüber hinaus, durch geieignete Dimensionierung des Tragbalkens, z.B. über seinen Querschnitt, eine definierte Steifigkeit oder auch Elastizitöt in die axiale Lagerung einzubringen, die zudem im Bedarfsfall auch nachträglich, z.B. durch Austausch gegen andere Tragbalken, verändert werden kann.

Die Lagerkonstruktion wurde anhand einer Rohrturbinenanlage beschrieben, bei der der Generator und die Turbine auf einer gemeinsamen Welle 4 angeordnet sind, und bei welcher der Generatorrotor fliegend gelagert ist. Sie kann selbstverständlich auch bei Anlagen mit beidseitig gelagerten Generator oder auch bei Anlagen eingesetzt werden, bei denen der Generator und die Turbine über eine Zwischenwelle, wie es beispielsweise in Bild 5 auf Seite 186, der Brown Boveri Mitteilungen a.a.O., der Fall ist, eingesetzt werden.

### BEZEICHNUNGSLISTE

- 1: Kapsel
- 2: untere Stütze
- 3: obere Stütze
- 4: Welle
- 5: Statorblechkörper
- 6: Rotor
- 7: Rotorkörper
- 8: Rotortragkörper
- 9: Nabe von 6
- 10: kombiniertes Trag- und Führungslager
- 11: Lagerträger
- 12: konisches Befestigungsteil
- 13: radiales Befestigungsteil
- 14: Flansch an 1
- 15,16: Lagerverschalungen
- 17,18: Nuten in 4
- 19: Ringnut in 4
- 20,21: Lagertragflächen an 4
- 22,23: Axiallager-Segmente
- 24: Tragbalken für 22 und 23
- 25: Schraubenbolzen
- 26: Auflagefläche für 24 an 11
- 27: Einstellmittel für 22 und 23
- 28: Tragfläche des Radiallagers
- 29: Radiallager-Segment
- 30: Einstellmittel für 29
- 31: Distanzplatte
- 32,33: Einzelringe
- 34: Stege
- 35: generatorseitige Stirnfläche von 11
- 36: L-förmige Abdeckung
- 37: mehrteiliger Ring
- 38,39: Berührungdichtungen
- 40: Ringleitung
- 41,42,43: Stichleitungen

- b: lichte Weite zwischen 32 und 4
- b₂₃: radiale Breite von 23

## Patentansprüche

1. Rohrturbinenanlage, bestehend aus einem von einem Gehäuse oder Kapsel (1) umschlossenen Generator (5,6,7) und einer Wasserturbine, die entweder auf einer gemeinsamen Welle (4) angeordnet oder deren Wellenenden über eine Kupplung miteinander verbunden sind, wobei im Wellenabschnitt zwischen Generator und Turbine ein kombiniertes Trag- und Führungslager (10) vorgesehen ist, welches kombinierte Trag- und Führungslager von einem es umgebenden Lagerträger (11) gehalten ist, an welchem Lagerträger erste Lagersegmente (29) befestigt sind, die mit einem ersten zylindrischen Wellenabschnitt (28) als Radiallagerträgfläche zusammenwirken, und an welchem Lagerträger (11) zwei Gruppen zweite Lagersegmente (22,23) befestigt sind, die mit zwei axial distanzierten radial gerichteten Wellenabschnitten als Axiallagertragflächen zusammenwirken, und Mittel (27,30) vorgesehen sind zur Einstellung der gegenseitigen Lage der Lagersegmente bezüglich der besagten Wellenabschnitte, **dadurch gekennzeichnet, dass** im Wellenabschnitt zwischen Turbine und Generator eine Ringnut (19) mit orthogonal zur Wellenachse verlaufenden Lagertragflächen (20,21) ausgebildet ist, dass die zweiten Lagersegmente (22,23) an je am radial innenliegenden Abschnitt eines gemeinsamen Tragbalkens (24) befestigt sind, welcher Tragbalken (24) am Lagerträger (11) lösbar befestigt ist, und welcher Tragbalken in die besagte Ringnut (19) eintaucht.

2. Rohrturbinenanlage nach Anspruch 1, **dadurch gekennzeichnet, dass** der Lagerträger aus zwei axial distanzierten Einzelringen (32,33) besteht, die mittels radial gerichteten, axial verlaufenden Stegen (34) distanziert sind und mit ersteren fest verbunden sind.

3. Rohrturbinenanlage nach Anspruch 2, **dadurch gekennzeichnet, dass** die Tragbalken (24) mittels Schraubenbolzen (25) welche den gesamten Lagerträger (11) axial durchsetzen an diesem befestigt sind.

4. Rohrturbinenanlage nach Anspruch 1, **dadurch gekennzeichnet, dass** der Lagerträger aus radial gerichteten, axial verlaufenden Stegen (34) besteht, dass an die beiden Enden der Stege (34) in Umfangsrichtung verlaufende Ringsegmente stumpf angeschweisst sind und Stege und Ringsegmente auf diese Weise ein doppelringartigen Lagerträger (11) bilden, und dass die Tragbalken (24) mittels Schraubenbolzen (25), welche die Stege (34) axial durchsetzen, am Lagerträger (11) lösbar befestigt sind.

5. Rohrturbinenanlage nach Anspruch 1, 2 oder 4, **dadurch gekennzeichnet, dass** die ersten Lagersegmente ((29) unter Zwischenschaltung von Einstellmitteln (30;31) an den Stirnseiten der Stege (34) lösbar befestigt sind.

6. Rohrturbinenanlage nach einem der Ansprüche 1 bis 5, **dadurch gekennzeichnet, dass** die orthogonal zur Achse der Welle (4) verlaufende Befestigungsfläche (26) am Lagerträger (11) auf der selben axialen Höhe liegt wie die Lagertragfläche (20) an der Seitenwand der Nut (19).

7. Rohrturbinenanlage nach einem der Ansprüche 1 bis 5, **dadurch gekennzeichnet, dass** bei auf unterschiedlichen axialen Höhen liegenden Befestigungsfläche (26) am Lagerträger (11) einerseits und Lagertragfläche (20) an der Seitenwand der Nut (19) andererseits die lichte Weite (b) zwischen Welle (4) und Lagerträger (11) grösser ist als die radiale Breite (b₂₃) des dem Lagerträger (11) benachbarten Segments (23).

## Claims

1. Tubular turbine plant, comprising a generator (5, 6, 7), enclosed by a housing or capsule (1), and a water turbine, which are either arranged on a common shaft (4) or their shaft ends are connected to one another via a coupling, a combined supporting and guide bearing (10) being provided in the shaft section between generator and turbine, which combined supporting and guide bearing is held by a bearing support (11) surrounding it, to which bearing support first bearing segments (29) are fastened, which interact with a first cylindrical shaft section (28) as a radial bearing-supporting surface, and to which bearing support (11) two groups of second bearing segments (22, 23) are fastened, which interact with two axially distanced, radially directed shaft sections as axial bearing-supporting surfaces, and means (27, 30) being provided for adjusting the mutual position of the bearing segments with regard to the said shaft sections, **characterized in that** an annular groove (19) having bearing-supporting surfaces (20, 21) running orthogonally to the shaft axis is formed in the shaft section between turbine and generator, and **in that** the second bearing segments (22, 23) are each fastened to the radially inner section of a common supporting beam (24) which is detachably fastened to the bearing support (11) and enters into the said annular groove (19).

2. Tubular turbine plant according to Claim 1, **characterized in that** the bearing support comprises two axially distanced individual rings (32, 33) which are distanced by means of radially directed, axially running webs (34) and are firmly connected to the latter.

3. Tubular turbine plant according to Claim 2, **characterized in that** the supporting beams (24) are fastened to the bearing support (11) by means of screw bolts (25) which pass axially through the entire bearing support (11).

4. Tubular turbine plant according to Claim 1, **characterized in that** the bearing support comprises radially directed, axially running webs (34), **in that** ring segments running in the peripheral direction are butt-welded to the two ends of the webs (34), and webs and ring segments in this manner form a double-ring-like bearing support (11), and **in that** the supporting beams (24) are detachably fastened to the bearing support (11) by means of screw bolts (25) which pass axially through the webs (34).

5. Tubular turbine plant according to Claim 1, 2 or 4, **characterized in that** the first bearing segments (29) are detachably fastened to the end faces of the webs (34) with adjusting means (30; 31) in between.

6. Tubular turbine plant according to one of Claims 1 to 5, **characterized in that** the fastening surface (26) on the bearing support (11), which fastening surface (26) runs orthogonally to the axis of the shaft (4), lies at the same axial level as the bearing-supporting surface (20) on the side wall of the groove (19).

7. Tubular turbine plant according to one of Claims 1 to 5, **characterized in that**, when the fastening surface (26) on the bearing support (11) on the one hand and the bearing-supporting surface (20) on the side wall of the groove (19) on the other hand lie at different axial levels, the clearance width (b) between shaft (4) and bearing support (11) is greater than the radial width (b₂₃) of the segment (23) adjacent to the bearing support (11).

## Revendications

1. Installation de turbine à bulbe constituée d'un alternateur (5, 6, 7) entouré d'une enveloppe ou capsule (1) et d'une turbine hydraulique qui soit sont disposées sur un arbre commun (4) soit présentent des extrémités d'arbre raccordées l'une à l'autre par l'intermédiaire d'un accouplement, dans laquelle un palier combiné d'appui et de guidage (10) est prévu dans le tronçon d'arbre entre l'alternateur et la turbine, lequel palier combiné d'appui et de guidage est maintenu par un support de palier (11) l'entourant sur lequel support de palier sont fixés des premiers segments de palier (29) qui coopèrent avec un premier tronçon d'arbre (28) cylindrique en tant que surface d'appui de palier radial, et sur lequel support de palier (11) deux groupes de deuxièmes segments de palier (22, 23) sont fixés qui coopèrent avec deux tronçons d'arbre orientés radialement et écartés l'un de l'autre en tant que surfaces d'appui de palier de butée, et des moyens (27, 30) sont prévus pour régler la position mutuelle des segments de palier par rapport auxdits tronçons d'arbre, **caractérisée en ce que** dans le tronçon entre la turbine et l'alternateur est façonnée une rainure annulaire (19) présentant des surfaces d'appui de palier (20, 21) s'étendant orthogonalement par rapport à l'axe de l'arbre, **en ce que** les deuxièmes segments de palier (22, 23) sont fixés respectivement sur la partie se trouvant radialement à l'intérieur, d'une poutrelle support (24) commune, laquelle poutrelle support est fixée au support de palier (11) en étant amovible, et laquelle poutrelle pénètre ladite rainure annulaire (19).

2. Installation de turbine à bulbe selon la revendication 1, **caractérisée en ce que** le support de palier est constitué de bagues séparées (32, 33) écartées axialement qui sont écartées au moyen d'entretoises (34) s'étendant axialement et orientées radialement et qui sont raccordées solidairement aux premières.

3. Installation de turbine à bulbe selon la revendication 2, **caractérisée en ce que** les poutrelles support (24) sont fixées au moyen de boulons filetés (25) qui traversent axialement l'ensemble du support de palier (11), à celui-ci.

4. Installation de turbine à bulbe selon la revendication 1, **caractérisée en ce que** le support de palier est constitué d'entretoises (34) s'étendant axialement et orientées radialement, **en ce que** des segments annulaires s'étendant dans le sens de la circonférence sont soudés bout à bout aux deux extrémités des entretoises (34) et les entretoises et segments annulaires forment ainsi un support de palier (11) de type à double bague, et **en ce que** les poutrelles support (24) sont fixées en étant amovibles au moyen de boulons filetés (25) qui traversent les entretoises(34) axialement, au support de palier (11).

5. Installation de turbine à bulbe selon la revendication 1, 2 ou 4, **caractérisée en ce que** les premiers segments de palier (29) sont fixés en étant amovibles par des moyens de réglage (30, 31) aux côtés frontaux des entretoises (34).

6. Installation de turbine à bulbe selon l'une quelconque des revendications 1 à 5, **caractérisée en ce que** la surface de fixation (26) sur le support de palier (11), s'étendant orthogonalement à l'axe de l'arbre (4) se trouve sur la même hauteur axiale que la surface d'appui de palier (20) sur la paroi latérale de la rainure (19).

7. Installation de turbine à bulbe selon l'une quelconque des revendications 1 à 5, **caractérisée en ce que** l'ouverture (b) entre l'arbre (4) et le support de palier (11) est plus grande que la largeur radiale (b₂₃) du segment (23) voisin du support de palier (11) lorsque la surface de fixation (26) sur le support de palier (11) d'une part et la surface d'appui de palier (20) sur la paroi latérale de la rainure (19) d'autre part se trouvent à des hauteurs axiales différentes.
